# EUROPÄISCHE PATENTSCHRIFT

(11) **EP 0 627 373 B1**
(45) Veröffentlichungstag und Bekanntmachung des Hinweises auf die Patenterteilung: **02.04.1997**
(21) Anmeldenummer: 94107193.8
(22) Anmeldetag: 07.05.1994
(51) Int. Cl.: B65G 59/02

(54) **Verfahren und Vorrichtung zur Aufnahme von Stückgut**
Method and device for picking up articles
Procédé et dispositif pour saisir des objets

(30) Priorität: 01.06.1993 CH 1620/93
(43) Veröffentlichungstag der Anmeldung: 07.12.1994
(73) Patentinhaber: Digitron AG, CH-5000 Aarau (CH)
(72) Erfinder: Wohlfahrt, Andreas, Haltern (DE); Ingelhag, Anders Georg Peder, Göteborg (SE)
(74) Vertreter: Blum, Rudolf Emil Ernst

(56) Entgegenhaltungen:
- DE-A- 3 733 461
- DE-A- 4 218 468
- FR-A- 2 318 089
- GB-A- 1 276 070

## Beschreibung

Die Erfindung bezieht sich auf ein Verfahren zur Aufnahme von Stückgut gemäss dem Oberbegriff des ersten Patentanspruchs sowie auf eine Vorrichtung zur Ausführung des Verfahrens gemäss dem Oberbegriff des achten Patentanspruchs.

Vorrichtungen zur automatischen Aufnahme von Gütern werden vor allem in automatisierten Lagerhäusern verwendet. In solchen Lagerhäusern sind in der Regel verschiedenste Güter gelagert und eine Aufnahmevorrichtung sollte im Stande sein, alle diese Güter schnell und sicher aufzunehmen, um sie zum Beispiel auf ein Regalbediengerät zu verladen.

Eine bekannte Aufnahmevorrichtung dieser Art, die in EP-A-548 545 resp. dem entsprechenden US-Patent US-A-5 265 712 beschrieben ist, weist einen Aufnahmetisch auf, welcher horizontal gegen das aufzunehmende Gut ausfahrbar ist. An seiner Vorderseite ist er mit Rollen ausgestattet, welche durch ein Transportband angetrieben werden. Kommt er mit der Vorderseite des aufzunehmenden Stückguts in Kontakt, so üben die Rollen resp. das Transportband eine nach oben gerichtete Reibungskraft auf das Gut aus, welche das Gut vorne anhebt. Diese Anhebebewegung kann dadurch unterstützt werden, dass eine Aufnahmehilfsvorrichtung von oben auf das Gut abgesenkt wird. Diese übt eine Kraft auf die Oberfläche des Guts aus, welche von der Aufnahmevorrichtung weggerichtet ist und die Anhebebewegung durch ihr Drehmoment unterstützt. Ist das Gut einmal angehoben, so fährt der Aufnahmetisch unter das Gut. Das Transportband wird dabei mit einer Geschwindigkeit betrieben, die gleich gross aber entgegengesetzt zur Geschwindigkeit des Aufnahmetisches ist. Dadurch wird das Gut auf den Aufnahmetisch geladen, ohne dass es in horizontaler Richtung verschoben wird. Eine ähnliche Vorrichtung wird in US-A-3 070 241 beschrieben.

Diese Methode ist nicht für alle Arten von Stückgut geeignet. So ergeben sich zum Beispiel Probleme bei paketförmigen Artikeln, welche relativ steif sind. Wird ein derartiger Artikel mit der beschriebenen Methode angehoben, so wird er um seine hintere Unterkante gekippt. Liegen mehrere derartige Artikel dicht hintereinander in einer Reihe, oder liegt ein Artikel an einer Wand, dann ist diese Kippbewegung nicht möglich, da der Artikel beim Kippen an den nächst hinteren resp. die Wand anstösst.

Eine andere Aufnahmevorrichtung wird in der deutschen Offenlegungsschrift DE-A-1 907 109 gezeigt. Hier ist der Aufnahmetisch mit einem Hebelarm versehen. Dieser hängt sich in einer Ausnehmung im Gut ein und zieht es auf den Aufnametisch. Diese Vorrichtung kann jedoch nur für Güter verwendet werden, die eine geeignete Ausnehmung besitzen. Ausserdem werden auch hier die Artikel um ihre hintere Unterkante gekippt, was ein Aufnehmen mehrerer, dicht hintereinander liegender Artikel verunmöglicht.

In EP-A-462 518 (entspricht US-A-5 238 350) wird eine weitere Aufnahmevorrichtung gezeigt, die mit einem Hilfsarm ausgerüstet werden kann. Dieser Hilfsarm wird beim Aufnehmen gegen das Stückgut gestossen. Dadurch wird das Gut um seine hintere Unterkante gekippt, was, wie bereits erwähnt, ein Aufnehmen dicht hintereinander liegender Güter verunmöglicht.

DE-A-4 218 468 beschreibt eine Anlage, in welcher Lagen von Artikeln an ihrer unteren Vorderseite von sich drehenden Rollen eines Aufnahmetisches angefahren werden. Dadurch wird die ganze Lage, bestehend z.B. aus mehreren Artikeln, um ihre hintere Oberkante gekippt, so dass der erste Artikel vom Aufnahmetisch unterfahren werden kann. Hierbei ergibt sich jedoch das Problem, dass nach der Aufnahme des ersten Artikel die übrigen wieder auf ihre Unterlage zurückfallen und deshalb der beschriebene Anhebevorgang bei jedem weiteren Artikel der selben Lage wiederholt werden muss. Dadurch, dass am Anfang die ganze Lage mit erheblichen Kräften angehoben wird, ist diese Anlage für die Handhabung gewisser Arten von Artikeln nicht geeignet.

Deshalb stellt sich die Aufgabe, eine Vorrichtung resp. eine Aufnahmemethode der beschriebenen Art bereitzustellen, welche diese Nachteile weitgehend vermeidet. Insbesondere soll sie auch für steife, hintereinander liegende Güter geeignet sein und ein sicheres, schnelles Aufnehmen ermöglichen.

Diese Aufgabe wird durch den unabhängigen Verfahrensanspruch resp. durch den unabhängigen Vorrichtungsanspruch gelöst.

Da das Gut beim erfindungsgemässen Verfahren um eine Drehachse im Bereich seiner hinteren Oberkante gekippt wird, so dass seine untere Vorderkante nach vorne und oben bewegt wird, wird hinter dem Artikel kein zusätzlicher Platz benötigt. Damit eignet sich das Aufnahmeverfahren auch für die Fälle, wo mehrere steife Artikel dicht hintereinander liegen. Durch die Kippbewegung wird die vordere Unterkante des Stückguts angehoben, so dass der Aufnahmetisch unter das Gut gefahren werden kann.

Der erfindungsgemässe Bewegungsablauf wird dadurch ermöglicht, dass in einem vorderen oberen Bereich des Stückguts durch ein Anstellelement eine vertikale Kraft nach oben ausgeübt wird. Dabei wird der Artikel vorzugsweise so abgestützt, dass er nicht nach hinten ausweichen kann. Die Abstützung kann zum Beispiel durch einen hinter dem Artikel liegenden zweiten Artikel oder aber durch ein Halteelement der Aufnahmevorrichtung geschehen, welches hinter den Artikel gebracht wird.

Es ist auch möglich, ein Ausweichen des Guts nach hinten zu verhindern, indem von oben ein Andruckelement auf das Gut abgesenkt wird. Dessen Andruckkraft sollte so bemessen sein, dass die maximale Haftreibung zwischen Artikel und Andruckelement grösser ist als jene zwischen Artikel und Unterlage.

Die erfindungsgemässe Aufnahmevorrichtung weist ein Anstellorgan auf, welches geeignet ist, die beschriebene vertikale Kraft auf den vorderen, oberen Bereich des Guts auszuüben. Dazu kann das Anstellelement zum Beispiel gegen das Gut gedrückt und dann nach oben bewegt werden.

Vorzugsweise weist die Vorrichtung zusätzlich einen Gegenhalterkopf auf, welcher von oben auf den hinteren Teil der Oberseite des Stückguts absenkbar ist und ein Andruckelement aufweist, welches auf das Gut gedrückt wird. Zur Vereinfachung der Kippbewegung kann das Andruckelement eine Kippachse aufweisen.

Am Gegenhalterkopf kann auch ein Halteelement angeordnet sein, welches nach unten ausfahrbar ist und so hinter das aufzunehmende Gut gebracht werden kann. Damit kann, wie beschrieben, ein Ausweichen des Guts nach hinten verhindert werden.

Dank der erfindungsgemässen Methode und Vorrichtung ist es somit möglich, auch steife, paketförmige Güter aufzunehmen, selbst wenn mehrere davon hintereinander angeordnet sind.

Es ist auch möglich, eine bestehende Aufnahmevorrichtung mit den erfindungsgemässen Merkmalen zu versehen, so dass mit einem Gerät verschiedenste Güter optimal aufgenommen werden können.

Weitere Vorteile und Anwendungen der Erfindung ergeben sich aus der folgenden Beschreibung zweier Ausführungsbeispiele anhand der Figuren. Dabei zeigen:
Figur 1 eine Gesamtansicht der Vorrichtung,
Figuren 2 - 4 drei Phasen bei der Aufnahme eines Artikels,
Figuren 5 und 6 eine Detailansicht des Anstellorgans von der Seite und von oben,
Figur 7 den Gegenhalterkopf in oberer Stellung;
Figur 8 den Gegenhalterkopf in unterer Stellung mit ausgefahrenem Haltelement;
Figuren 9 - 11 den Aufnahmevorgang bei einer alternativen Ausführung der Erfindung; und
Figur 12 eine schematische, perspektivische Darstellung der Vorrichtung gemäss Fig. 9 bis 11.

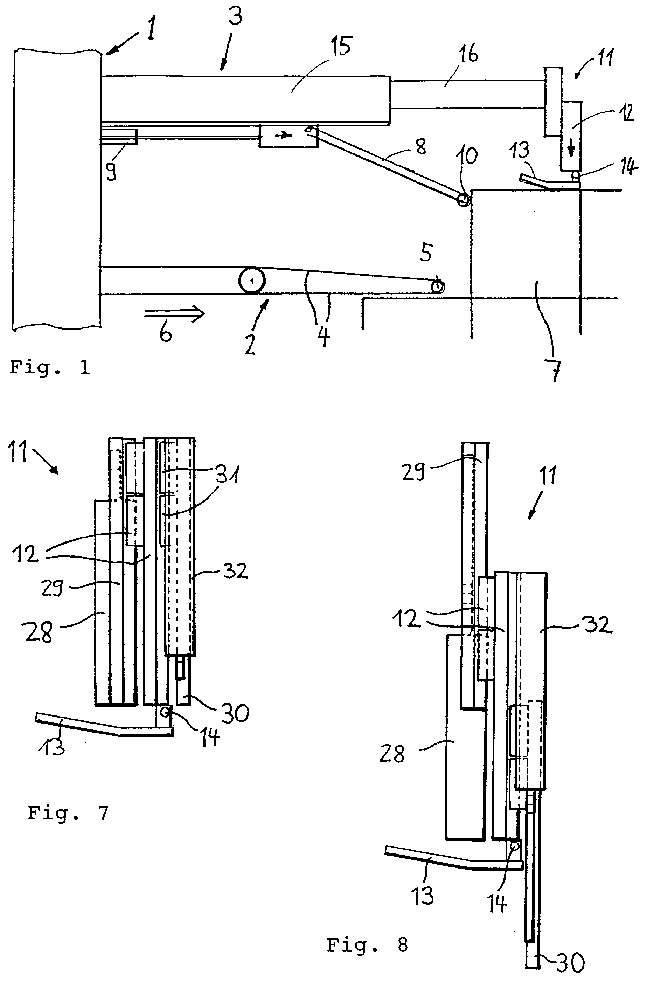

Die Figur 1 zeigt eine Gesamtansicht eines Ausführungsbeispiels einer erfindungsgemässen Aufnahmevorrichtung. Die Aufnahmevorrichtung ist Teil eines Regalbedienfahrzeugs 1, welches zum Beispiel verfahrbar in einer Regalgasse installiert ist. Sie umfasst einen Aufnahmetisch 2 und eine Aufnahmehilfsvorrichtung 3.

Der Aufnahmetisch kann horizontal in einer Ausfahrrichtung 6 gegen das aufzunehmende Gut 7 ausgefahren werden. Er ist ferner mit einer Transportvorrichtung für einen auf ihm liegenden Artikel ausgerüstet. Diese wird durch ein Transportband rsp. Förderband 4 gebildet, welches über eine vordere Umlenkrolle 5 geführt wird und in beiden Richtungen angetrieben werden kann.

Die Aufnahmehilfsvorrichtung 3 weist ein Anstellelement 8 auf. Mit einem pneumatischen Antrieb 9 kann das Anstellelement 8 ebenfalls in Ausfahrrichtung 6 ausgefahren werden. Das vordere Ende 10 des Anstellelements 8 ist mit Gummi belegt, um eine gute Haftreibung am aufzunehmenden Artikel 7 zu gewährleisten.

Die Aufnahmehilfsvorrichtung 3 weist ausserdem einen Gegenhalterkopf 11 auf. Der Gegenhalterkopf ist auf einem ausfahrbaren Teleskoparm 15, 16 montiert. Auf einem pneumatisch angetriebenen, vertikal verfahrbaren Schlitten 12 des Gegenhalterkopfs 11 ist ein Andruckelement 13 montiert, welches mit dem Schlitten 12 über ein Gelenk 14 verbunden ist. Das Gelenk 14 ermöglicht eine Verkippung des Andruckelements 13 gegen den Schlitten 12 um eine horizontale, quer zur Ausfahrrichtung 6 liegende Drehachse.

Bevor auf weitere konstruktive Details der Aufnahmevorrichtung eingegangen wird, soll zuerst deren prinzipielle Arbeitsweise anhand der Figuren 2 - 4 gezeigt werden.

Zuerst wird die Aufnahmevorrichtung vor den aufzumehmenden Artikel 7 gefahren. Die Höhe des Aufnahmetisches 2 und des Anstellorgans 8 werden so eingestellt, dass sich das Ende 10 des Anstellorgans in ausgefahrener Stellung leicht unter der vorderen Oberkante 19 und die Rolle 5 des Aufnahmetisches 2 knapp über der unteren Vorderkante 18 des Artikels 7 befindet (vgl. Figur 3).

Dann fährt der Teleksoparm 15, 16 mit dem Gegenhalterkopf 11 in eine Position wie sie in Figur 2 gezeigt wird. Diese Position wird durch eine NC-Steuerung vorgegeben und ist durch die Lage des aufzunehmenden Artikels 7 bestimmt. Das Andruckelement 13 befindet sich nun etwa 80 mm über der hinteren Oberkante 17 des Artikels.

Dann wird der pneumatische Antrieb des Schlittens 12 aktiviert und das Andruckelement 13 senkt sich auf den Artikel 7 ab. Dort drückt es mit einer vorgegebenen konstanten Kraft nach unten (vgl. Figur 3). Gleichzeitig wird der pneumatische Antrieb 9 des Anstellorgans 8 mit einem vorgegebenen Druck angetrieben, und das Anstellorgan 8 fährt horizontal aus. Dabei wird es von der in Figur 2 gezeigten oberen Position in eine in Figur 3 gezeigte abgewinkelte, untere Position geklappt. Dies wird durch einen speziellen Führungsmechanismus bewirkt, welcher weiter unten beschrieben wird. Das Anstellorgan 8 wird soweit ausgefahren, bis sein Ende 10 an den Artikel 7 stösst. Durch den pneumatischen Antrieb wird es sodann mit konstanter Kraft gegen den Artikel gedrückt.

Jetzt hebt sich, wie in Figur 4 gezeigt, die Aufnahmehilfsvorrichtung 3 zusammen mit dem Anstellorgan 8, 10 um zum Beispiel 60 mm, wobei die vertikale Andruckkraft des Andruckelements 13 und die horizontale Andruckkraft des Anstellorgans 8 unverändert bleiben. Dadurch wird der Artikel 12 gekippt, d.h. angestellt. Die Kippbewegung geschieht im wesentlichen um die Achse des Gelenks 14, welches sich in einem hinteren, oberen Bereich des Artikels 7 nahe seiner hinteren Oberkante 17 befindet. Somit liegt die Kippachse im wesentlichen in der hinteren Oberkante des Artikels. Dadurch wird dessen vordere Unterkante 18 nach oben gehoben, sodass sich eine Oeffnung bildet. Der Aufnahmetisch 2 wird in Ausfahrrichtung 6 ausgefahren und fährt in diese Oeffnung ein. Synchron mit der Ausfahrgeschwindigkeit des Ausfahrtisches 2 wird das Transportband 4 in Gegenrichtung betrieben, so dass der Artikel beim Unterfahren durch den Aufnahmetisch 2 auf diesen aufgeladen wird, ohne sich in Horizontalrichtung zu verschieben. Noch bevor der Aufnahmetisch 2 den Artikel 7 vollständig aufgenommen hat, wird das Anstellorgan 8 zurückgefahren und parallel dazu der Aufnahmevorgang in konventioneller Weise weitergeführt und beendet.

Weitere Erörterungen zum Aufnahmevorgang werden am Schluss dieser Beschreibung gegeben. Zunächst werden jedoch noch einige bevorzugte konstruktive Merkmale der Vorrichtung erläutert, welche den Aufnahmevorgang gemäss den Figuren 2 bis 4 ermöglichen, bzw. vereinfachen.

Die Figuren 5 und 6 zeigen eine Detailansicht des Anstellorgans 8 und dessen Aufhängung und Führung von der Seite und von oben. Die Halterung umfasst eine horizontale Führung 20 (welche am Teleskoparm 15 befestigt ist) und einem Schlitten 21, der in der Führung 20 läuft. Das eigentliche Anstellorgan 8 ist über ein Gelenk 22 und eine Stange 23 mit dem Pneumatikzylinder 9 verbunden. Das Gelenk 22 erlaubt ein Herunterklappen des Anstellorgans 8 bis zu der in Figur 5 gezeigten Winkelposition. In ausgefahrener Position (wie in Fig. 5 gezeigt), ist das Anstellorgan 8 immer heruntergeklappt (Schwerkraft). Wird das Anstellelement aber völlig eingezogen, dann wird es automatisch hochgeklappt. Dieses Hochklappen wird durch einen am Teleskoparm 15 angebrachten Anschlag 24 bewirkt, dessen vordere obere Kante 25 gerundet ist. Beim Einziehen des Anstellorgans läuft dessen untere Fläche 26 auf der Rundung 25 auf, was ein sanftes Hochklappen bewirkt. Auf diese Weise ist es möglich, das Anstellorgan in die in Figur 2 gezeigte, obere Stellung zu bringen.

In den Figuren 7 und 8 wird der Gegenhalterkopf 11 in eingezogener bzw. ausgefahrener Stellung gezeigt. Gut sichtbar sind dabei das Andruckelement 13 und dessen Kippgelenk 14, welches das Andruckelement mit dem vertikal beweglichen Schlitten 12 verbindet. Der Schlitten 12 kann mit einem pneumatischen, kraftgeregelten Antrieb 28 gegen den am Teleskoparm 16 befestigten Halteteil 29 verschoben werden.

Zusätzlich ist an dieser bevorzugten Ausführung des Gegenhalterkopfs ein Haltelement 30 angeordnet. Dieses ist über eine Führung 31 mit dem Schlitten 12 des Andruckelements verbunden und mittels einer pneumatischen Lineareinheit 32 nach unten ausfahrbar.

Das Halteelement 30 kommt insbesondere dann zum Einsatz, wenn der letzte Artikel einer Reihe aufgenommen werden soll. Es wird hinter den Artikel abgesenkt und verhindert, dass der Artikel unter dem Druck des Anstellorgans nach hinten ausweichen kann.

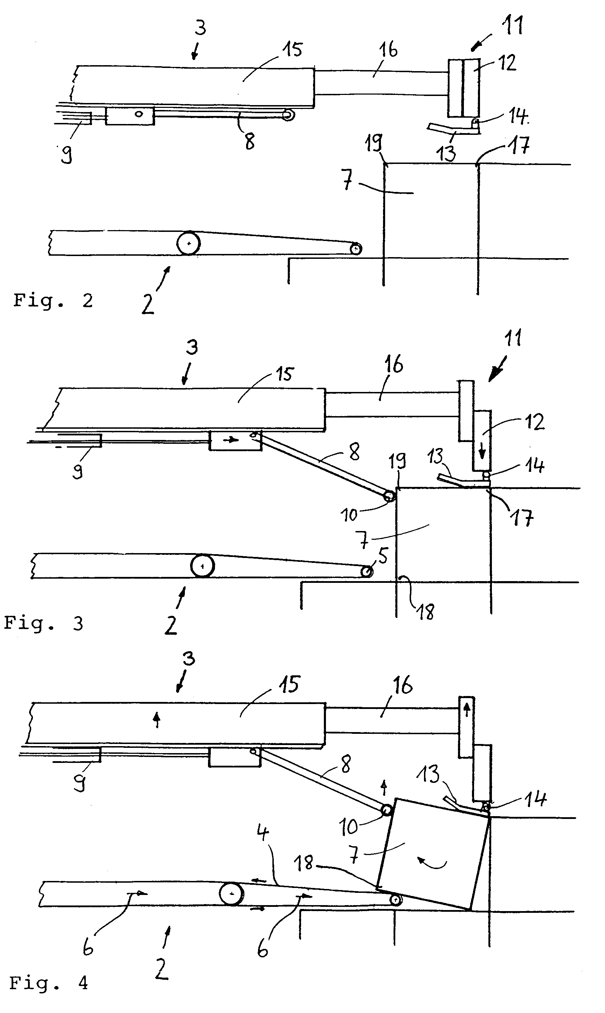

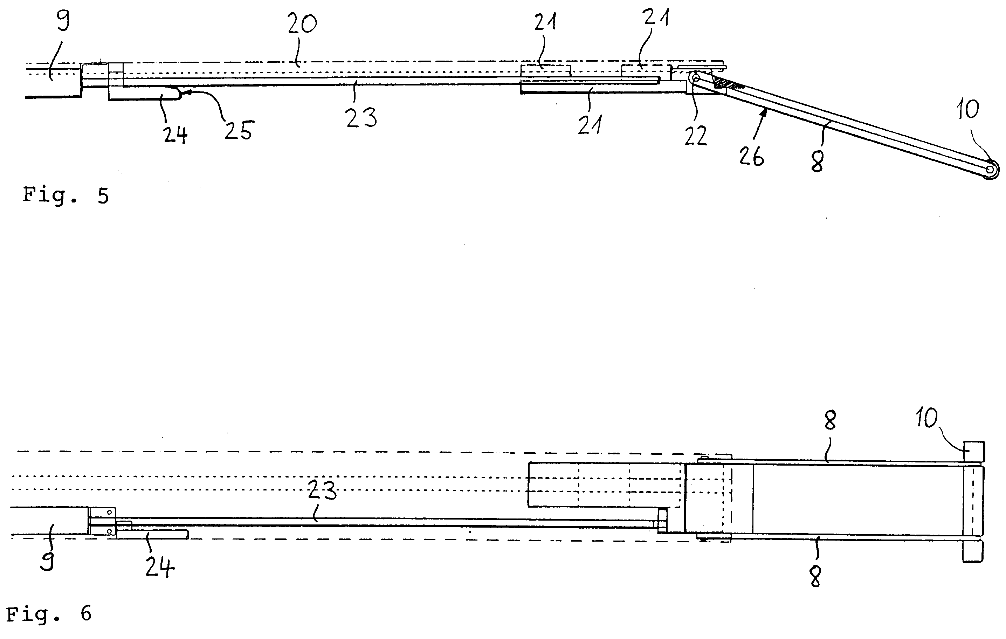

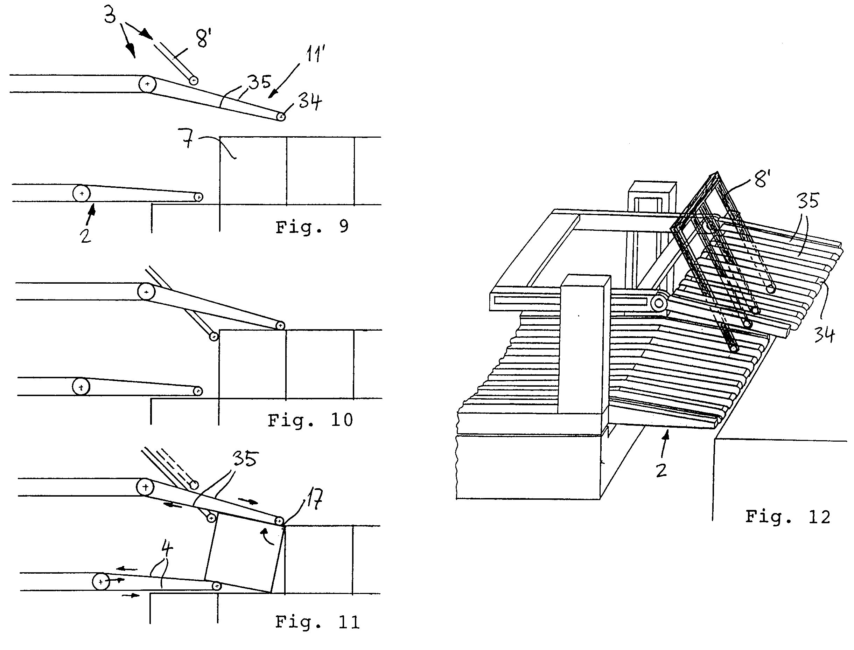

In den Figuren 9 - 12 wird eine Aufnahmevorrichtung mit einer zweiten Ausführung der Aufnahmehilfsvorrichtung 3 gezeigt. Der Gegenhalterkopf 11' weist hier, ähnlich wie der Aufnahmetisch 2, eine vordere Umlenkrolle 34 auf, über die parallele Transportbänder 35 geführt sind (Fig. 12). Zur Aufnahme des Guts 7 wird das vordere Ende des Gegenhalterkopfs 11' mit stillstehenden Transportbändern 35 auf das hintere Ende der Oberseite des Guts 7 abgesenkt (Fig. 9, 10). Gleichzeitig greift das Anstellorgan 8' zwischen den Transportbändern 35 nach unten, wird an das Gut gedrückt und unter bleibendem Andruck nach oben geführt. Damit kippt das Gut um die hintere Oberkante 17 und kann vom Aufnahmetisch 2 unterfahren werden (Fig. 11). Das Anstellorgan 8' zieht sich auf seine gestrichelte Ausgangsposition zurück. Zur Führung des Guts bei der Aufnahme können jetzt die Transportbänder 4 und 35, wie in Figur 11 mit Pfeilen angedeutet, angetrieben werden.

In der perspektivischen Darstellung nach Figur 12 wird schematisch gezeigt, wie das Anstellorgan 8' mit mehreren Armen zwischen die Transportbänder 35 greifen kann, um das Ladegut zu erreichen. Führung, Halterung und Antrieb des Anstellorgans 8' sind zur Vereinfachung der Zeichnung nicht dargestellt. Zur Erweiterung der Fähigkeiten des Gegenhalterkopfes 11' kann dieser noch zusätzlich mit einem oder mehreren Halteelementen ausgerüstet werden, die hinter den Artikel absenkbar oder abschwenkbar sind und funktionell dem Halteelement 30 der Figur 8 entsprechen.

Mit den soweit beschriebenen Ausführungsbeispielen der erfindungsgemässen Aufnahmevorrichtung lassen sich verschiedene Aufnahmeverfahren realisieren. Dabei kann es sich auch um bekannte Verfahren handeln, bei welchen ohne das Anstellorgan 8 resp. 8' gearbeitet wird. Dazu wird z.B. die Umlenkrolle 5 des Aufnahmetischs 2 an den Artikel gedrückt und drehend angetrieben. Durch die entstehende Reibungskraft wird der Artikel vorne hochgehoben und kann vom Aufnahmetisch unterfahren werden. Bei steifen Artikeln wird dabei der Artikel um seine hintere Unterkante gekippt. Diese Kippbewegung kann dadurch unterstützt werden, dass der Gegenhalterkopf 11 resp. 11' auf den Artikel gedrückt wird und auf diesen eine Kraft in Ausfahrrichtung ausübt. Dadurch entsteht ein zusätzliches Drehmoment auf den Artikel, welches das Kippen um die hintere Unterkante unterstützt.

Beim erfindungsgemässen Verfahren wird der Artikel jedoch, wie bereits beschrieben, nicht um die hintere Unterkante gekippt, sondern um eine Kippachse, die in der Nähe seiner hinteren Oberkante 17 liegt. Um eine solche Kippbewegung zu erzeugen, muss das Anstellorgan eingesetzt werden. Dieses greift am oberen Teil (z.B. in einer oberen Hälfte) der Vorderfläche des Artikels an und erzeugt dort eine Kraft, welche eine nach oben gerichtete Vertikalkomponente aufweist. Dadurch wird ein wie in Figur 4 resp. 11 gezeigtes Kippen des Artikels bewirkt. Dabei sollten z.B. die folgenden zwei Bedingungen möglichst eingehalten werden:
1. Die Andruckkraft des Anstellorgans 8 ist so gross zu bemessen, dass die maximale Haftreibungskraft zwischen dem gummibelegten Ende 10 und dem Artikel 7 grösser als oder zumindest etwa so gross wie das Artikelgewicht ist, und
2. die Druckkraft des Gegenhalterkopfs auf den Artikel ist bezüglich des Artikelgewichts so zu wählen, dass die maximale Haftreibungskraft zwischen dem gummibelegten Andruckelement und der Artikeloberfläche grösser ist als die maximale Haftreibungskraft zwischen dem aufzunehmenden Artikel 7 und dessen Unterlage.

Bedingung 2 braucht nicht unbedingt eingehalten zu werden, wenn der Artikel auf andere Weise daran gehindert wird, nach hinten (d.h. in Ausfahrrichtung 6) auszuweichen. Hierzu kann z.B. die Halteplatte 30 des Gegenhalterkopfs 11 eingesetzt werden. Ein Ausweichen des aufzunehmenden Artikels nach hinten kann jedoch auch dadurch verhindert werden, dass hinter diesem ein nächster Artikel steht. Ist dieser nächste Artikel zu leicht, um dem Druck des aufzunehmenden Artikels entgegenzustehen, dann kann er auch mit dem Gegenhalterkopf (durch Andruck mit dem Andruckelement 13 und/oder durch Stützung mit dem Haltelement 30) festgehalten werden.

Der Einsatz des Gegenhalterkopfs 11 resp. 11' kann somit in verschiedener Weise erfolgen. Insbesondere kann er, wie in den Figuren 3 und 4 gezeigt, mit dem Andruckelement 13 das aufzunehmende Gut festhalten. Er kann hierzu auch zusätzlich oder alternativ zum Andruckelement 13 das Halteelement 30 einsetzen. Er kann aber auch das hinter dem aufzunehmenden Artikel angeordnete Gut festhalten. Auf einen Einsatz des Gegenhalterkopfs kann in gewissen Fällen sogar verzichtet werden, insbesondere dann, wenn der aufzunehmende Artikel in anderer Weise daran gehindert wird, nach hinten auszuweichen.

Der Gegenhalterkopf 11 kann auch nach der Kippung des Artikels noch eingesetzt werden, um den Artikel auf den Aufnahmetisch mitzuführen (Fig. 11).

Die jeweilen zu verwendende, optimale Aufnahmemethode wird von einer numerischen Steuerung je nach aufzunehmendem Artikel und dessen Position aus mehreren, vorprogrammierten Bewegungsabläufen ausgewählt.

## Patentansprüche

1. Verfahren zur Aufnahme von Stückgut (7) mittels einer Aufnahmevorrichtung, wobei die Aufnahmevorrichtung einen Aufnahmetisch (2) aufweist, welcher in einer Ausfahrrichtung gegen das Stückgut (7) ausfahrbar ist, in welchem Verfahren das Stückgut (7) um eine horizontale Drehachse gekippt wird, welche sich in einem hinteren, oberen Bereich (17) des Stückguts (7) befindet, so dass der Boden des Stückguts (7) in einem vorderen Bereich angehoben wird, worauf der Aufnahmetisch (2) zur Aufnahme mindestens teilweise unter das Stückgut (7) gefahren wird, dadurch gekennzeichnet, dass ein Anstellorgan (8, 8') der Aufnahmevorrichtung gegen das Stückgut (7) ausgefahren und an einer Angriffsfläche in einen vorderen, oberen Bereich des Stückguts in Anschlag gebracht wird, worauf mit dem Anstellorgan (8, 8') eine Kraft mit nach oben gerichteter Vertikalkomponente auf das Stückgut (7) ausgeübt und das Stückgut um die Drehachse gekippt wird.

2. Verfahren nach Anspruch 1, dadurch gekennzeichnet, dass während des Kippens ein Ausweichen des Stückguts (7) in Ausfahrrichtung durch ein hinter dem Stückgut gelegenes zweites Stückgut oder durch ein hinter das Stückgut gebrachtes Halteelement (30) im wesentlichen verhindert wird.

3. Verfahren nach einem der vorangehenden Ansprüche, dadurch gekennzeichnet, dass während des Kippens ein Andruckelement (13) auf einem oberen, hinteren Teil des Stückguts (7) aufliegt.

4. Verfahren nach Anspruch 3, dadurch gekennzeichnet, dass das Andruckelement (13) eine nach unten gerichtete Kraft auf das Stückgut (7) ausübt, und dass die Oberflächen des Andruckelements (13), des Stückguts (7) und einer Unterlage des Stückguts sowie die nach unten gerichtete Kraft des Andruckelements (13) und die Gewichtskraft des Stückguts (7) so abgestimmt sind, dass die maximale horizontale Haftreibung zwischen dem Stückgut (7) und dem Andruckelement (13) grösser ist als jene zwischen dem Stückgut (7) und der Unterlage.

5. Verfahren nach einem der Ansprüche 3 oder 4, dadurch gekennzeichnet, dass im Andruckelement (13) eine Kippachse (14) vorgesehen ist, welche die Drehachse zum Kippen des Stückguts bildet.

6. Verfahren nach einem der Ansprüche 3 - 5, dadurch gekennzeichnet, dass das Andruckelement (13) während des Kippens des Stückguts (7) mit einer im wesentlichen konstanten Kraft gegen das Stückgut (7) gedrückt wird.

7. Verfahren nach einem der vorangehenden Ansprüche, dadurch gekennzeichnet, dass das Anstellorgan (8, 8') während des Kippens des Stückguts (7) mit einer im wesentlichen konstanten Kraft gegen das Stückgut (7) gedrückt wird.

8. Aufnahmevorrichtung zur Ausführung des Verfahrens nach einem der vorangehenden Ansprüche, mit einem in einer Aufnahmerichtung (6) ausfahrbarem Aufnahmetisch (2), dadurch gekennzeichnet, dass sie ein Anstellorgan (8, 8') aufweist, welches, höher als der Aufnahmetisch (2) angeordnet, in Aufnahmerichtung (6) ausfahrbar ist und ausgestattet ist zur Ausübung einer Kraft mit nach oben gerichteter Vertikalkomponente zum Kippen des Stückguts (7) um eine horizontale Drehachse in einem hinteren, oberen Bereich (17) des Stückguts (7) und somit zum Anheben des Bodens des Stückguts (7) in einem vorderen Bereich.

9. Aufnahmevorrichtung nach Anspruch 8, dadurch gekennzeichnet, dass das Anstellorgan (8, 8') in vertikaler Richtung verfahrbar ist.

10. Aufnahmevorrichtung nach einem der Ansprüche 8 oder 9, dadurch gekennzeichnet, dass das Anstellorgan (8, 8') einen ersten Andruckantrieb (9) aufweist, mittels welchem es mit einer vorgegebenen Kraft in Aufnahmerichtung drückbar ist.

11. Aufnahmevorrichtung nach einem der Ansprüche 8 - 10, dadurch gekennzeichnet, dass sie einen Gegenhalterkopf (11, 11') aufweist, welcher von oben auf das aufzunehmende Stückgut (7) absenkbar ist.

12. Aufnahmevorrichtung nach Anspruch 11, dadurch gekennzeichnet, dass der Gegenhaltekopf (11, 11') ein Andruckelement (13) zur Kontaktierung des aufzunehmenden Stückguts (7) aufweist, welches um eine horizontale Drehachse (14) kippbar ist.

13. Aufnahmevorrichtung nach einem der Ansprüche 11 oder 12, dadurch gekennzeichnet, dass der Gegenhalterkopf (11, 11') ein Halteelement (30) aufweist, welches zur Absenkung hinter das aufzunehmende Stückgut (7) in vertikaler Richtung nach unten ausfahrbar ist.

14. Aufnahmevorrichtung nach einem der Ansprüche 11 - 13, dadurch gekennzeichnet, dass der Gegenhalterkopf (11, 11') einen zweiten Andruckantrieb (28) aufweist, mit welchem er mit einer vorgegebenen Kraft von oben auf das aufzunehmende Stückgut (7) drückbar ist.

15. Aufnahmevorrichtung nach einem der Ansprüche 11 - 14, dadurch gekennzeichnet, dass der Gegenhalterkopf (11) und das Anstellorgan (8) gemeinsam in vertikaler Richtung verfahrbar sind.

16. Aufnahmevorrichtung nach einem der Ansprüche 8 - 15, dadurch gekennzeichnet, dass der Aufnahmetisch (2) eine Transportvorrichtung, insbesondere ein Transportband (4) aufweist, mittels welcher das aufzunehmende Gut (7) über den Aufnahmetisch (2) verfahrbar ist.

## Claims

1. Method for picking up articles (7) by means of a pick-up device, wherein the pick-up device comprises a receiving table (2), which can be extended along a direction of extension against the article (7), in which method the article (7) is rotated about a horizontal axis of rotation, which is located in a upper rear area (17) of the article (7), such that the bottom of the article (7) is lifted in a forward area, whereupon the receiving table is extended at least partially below the article (7) for pick-up, characterised in that a lifting member (8, 8') of the pick-up device is extended against the article (7) and brought into contact at a contact surface in a forward upper area of the article, whereupon a force with upward directed vertical component is exerted onto the article (7) by means of the lifting member (8, 8') and the article is tilted about the axis of rotation.

2. Method of claim 1 characterised in that during tilting a yielding of the article (7) in the direction of extension is substantially prevented by second article located behind the article or by a holding member (30) brought behind the article.

3. Method of one of the preceding claims characterised in that during tilting an pushing member (13) is abutting on an upper rear area of the article (17).

4. Method of claim 3 characterised in that the pushing member (13) exerts a downward directed force onto the article (7) and that the surface of the pushing member (13), of the article (7) and of a support of the article as well as the downward directed force of the pushing member (13) and the weight force of the article (7) are adjusted such that the maximum horizontal static friction between the article (7) and the pushing member (13) is larger than the one between the article (7) and the support.

5. Method of one of the claims 3 or 4 characterised in that a tilting axis (14) is provided in the pushing member (13), which forms the axis of rotation for tilting the article.

6. Method of one of the claims 3 - 5 characterised in that the pushing member (13) is pushed with a substantially constant force against the article (7) while tilting the article (7).

7. Method of one of the preceding claims characterised in that during tilting the article (7) the lifting member (8, 8') is pushed against the article (7) with a substantially constant force.

8. Pick-up device for carrying out the method of one of the preceding claims with a receiving table (2) extendible along a pick-up direction (6), characterised in that it comprises a lifting member (8, 8'), which is arranged higher than the receiving table (2), extendible along the pick-up direction (6) and designed for exerting a force with upward directed vertical component for tilting the article (7) about a horizontal rotation axis in a upper rear area (17) of the article (7) and thereby for lifting the bottom of the article (7) in a forward area.

9. Pick-up device of claim 8 characterised in that the lifting member (8, 8') can be displaced in vertical direction.

10. Pick-up member of one of the claims 8 or 9 characterised in that the lifting member (8, 8') comprises a first pushing drive (9) by means of which it can be pushed into the pick-up direction with a given force.

11. Pick-up device of one of the claims 8 - 10 characterised in that it comprises a counterhold head (11, 11'), which can be lowered from above onto the article to be picked up (7).

12. Pick-up device of claim 11, characterised in that the counterhold head (11, 11') comprises a pushing member (13) for contacting the article to be picked up, which pushing member is tiltable about a horizontal axis (14).

13. Pick-up device of one of the claims 11 or 12 characterised in that the counterhold head (11, 11') comprises a holding member (30) which can be extended downward for lowering behind the article (7) to be picked up.

14. Pick-up device of one of the claims 11 - 13 characterised in that the counterhold head (11, 11') comprises a second pushing drive (28), by means of which it can be pressed from above with a given force onto the article (7) to be picked up.

15. Pick-up device of one of the claims 11 - 14 characterised in that the counterhold head (11) and the lifting member (8) can be displaced together in vertical direction.

16. Pick-up device of one of the claims 8 - 15 characterised in that the receiving table (2) comprises a transport device, especially a transport belt (4), by means of which the article (7) to be picked up can be moved over the receiving table (2).

## Revendications

1. Procédé pour saisir des pièces de marchandises (7) au moyen d'un dispositif de réception comportant une table réceptrice (2) pouvant être déployée en une direction d'avance vers les pièces (7) de marchandises, le procédé comportant un basculement de la pièce (7) autour d'un axe de rotation horizontal situé en une région postérieure et supérieure (17) de la pièce (7) de manière à soulever la base de la pièce (7) en une région antérieure, la table (2) étant alors avancée au moins partiellement sous la pièce (7) pour recevoir celle-ci, caractérisé en ce qu'on déploie un organe d'actionnement (8, 8') du dispositif de réception vers la pièce (7), qu'on amène cet organe en contact contre une surface d'appui dans la région antérieure et supérieure de la pièce de marchandise, et qu'on exerce ensuite avec cet organe (8, 8') une force comportant une composante verticale dirigée vers le haut sur la pièce (7) et que l'on bascule celle-ci autour de l'axe de rotation.

2. Procédé selon la revendication 1, caractérisé en ce qu'on évite une dérive sensible de la pièce (7) dans la direction d'avance pendant le basculement au moyen d'une seconde pièce de marchandise placée derrière la première, ou au moyen d'un butoir (30) amené derrière la pièce de marchandise.

3. Procédé selon une des revendications précédentes, caractérisé en ce qu'au cours du basculement un organe d'appui (13) repose sur une région supérieure et postérieure de la pièce (7)

4. Procédé selon la revendication 3, caractérisé en ce que l'organe d'appui (13) exerce sur la pièce de marchandise (7) une force dirigée vers le bas, et que les surfaces de l'organe d'appui (13), de la pièce de marchandise (7) et d'une surface sur laquelle repose la pièce, ainsi que les forces dirigées vers le bas de l'organe d'appui (13) et du poids de la pièce de marchandise (7) sont équilibrées de manière à ce que la friction horizontale maximale entre la pièce (7) et l'organe d'appui (13) excède celle entre la pièce de marchandise (7) et la surface sur laquelle elle repose.

5. Procédé selon une des revendications 3 ou 4, caractérisé en ce que l'organe d'appui (13) comporte un pivot (14) faisant office d'axe de rotation pour le basculement de la pièce de marchandise.

6. Procédé selon une des revendications 3 à 5, caractérisé en ce que l'organe d'appui (13) est pressé contre la pièce de marchandise (7) avec une force essentiellement constante pendant le basculement de la pièce (7).

7. Procédé selon une des revendications précédentes, caractérisé en ce que l'organe d'actionnement (8, 8') est pressé contre la pièce de marchandise (7) avec une force essentiellement constante pendant le basculement de la pièce (7).

8. Dispositif pour la réalisation du procédé selon une des revendications précédentes, avec une table réceptrice (2) pouvant être déployée en une direction d'avance (6), caractérisé en ce qu'il comporte un organe d'actionnement (8, 8') disposé à un niveau supérieur à celui de la table (2), pouvant être avancé en la direction d'avance (6) et agencé pour exercer une force comportant une composante verticale dirigée vers le haut pour basculer la pièce de marchandise (7) autour d'un axe de rotation horizontal situé dans une région postérieure et supérieure (17) de la pièce (7), et ainsi soulever le fond de cette pièce de marchandise (7) dans une région antérieure.

9. Dispositif selon la revendication 8, caractérisé en ce que l'organe d'actionnement (8, 8') peut être déplacé en direction verticale.

10. Dispositif selon une des revendications 8 ou 9, caractérisé en ce que l'organe d'actionnement (8, 8') comporte un premier générateur de poussée (9) permettant de le pousser avec une force prédéterminée dans la direction d'avance.

11. Dispositif selon une des revendications 8 à 10, caractérisé en ce qu'il comporte un organe antagoniste (11, 11') pouvant être abaissé à partir d'en haut jusque sur la pièce de marchandise (7) à saisir.

12. Dispositif selon la revendication 11, caractérisé en ce que l'organe antagoniste (11, 11') comporte un élément de contact (13) prévu pour entrer en contact avec la pièce à saisir (7) et pouvant pivoter autour d'un axe de rotation (14) horizontal.

13. Dispositif selon une des revendications 11 ou 12, caractérisé en ce que l'organe antagoniste (11, 11') comporte un butoir (30) pouvant être déployé verticalement vers le bas pour être abaissé derrière la pièce (7) à saisir.

14. Dispositif selon une des revendications 11 à 13, caractérisé en ce que l'organe antagoniste (11, 11') comporte un second générateur de poussée (28) pouvant le presser depuis le haut et avec une force prédéterminée contre la pièce (7) à saisir.

15. Dispositif selon une des revendications 11 à 14, caractérisé en ce que l'organe antagoniste (11) et l'organe d'actionnement (8) sont déplaçables ensemble en direction verticale.

16. Dispositif selon une des revendications 8 à 15, caractérisé en ce que la table (2) comporte un dispositif de transport, en particulier un tapis roulant (4), pour acheminer la marchandise (7) à travers la table réceptrice (2).
